# EUROPÄISCHE PATENTSCHRIFT

(11) **EP 2 094 464 B1**
(45) Veröffentlichungstag und Bekanntmachung des Hinweises auf die Patenterteilung: **27.03.2013**
(21) Anmeldenummer: 07801861.1
(22) Anmeldetag: 24.08.2007
(51) Int. Cl.: B29C 45/27

(54) **ELEKTRISCHE HEIZEINRICHTUNG FÜR HEISSKANALSYSTEME UND VERFAHREN ZU IHRER HERSTELLUNG**
ELECTRIC HEATING DEVICE FOR HOT RUNNER SYSTEMS AND METHOD FOR MANUFACTURING THE SAME
DISPOSITIF DE CHAUFFAGE ÉLECTRIQUE POUR SYSTÈMES À CANAUX CHAUDS ET SON PROCEDE DE FABRICATION

(30) Priorität: 18.10.2006 DE 102006049669
(43) Veröffentlichungstag der Anmeldung: 02.09.2009
(73) Patentinhaber: Günther Heisskanaltechnik GmbH, 35066 Frankenberg/Eder (DE)
(72) Erfinder: GÜNTHER, Herbert, 35108 Allendorf/Eder (DE)
(74) Vertreter: Buchhold, Jürgen
(86) Internationale Anmeldenummer: PCT/EP2007/007433
(87) Internationale Veröffentlichungsnummer: WO 2008/046465

(56) Entgegenhaltungen:
- WO-A-01/66333
- DE-A1- 10 333 206
- DE-A1- 19 941 038
- JP-A- 10 272 653

## Beschreibung

Die Erfindung betrifft eine elektrische Heizeinrichtung für Heißkanalsysteme, insbesondere für Heißkanaldüsen und/oder Heißkanalverteiler.

Heißkanalsysteme werden in Spritzgießwerkzeugen eingesetzt, um eine fließfähige Masse - beispielsweise eine Kunststoffschmelze - bei einer vorgebbaren Temperatur unter hohem Druck einem trennbaren Formeinsatz zuzuführen. Sie haben meist ein Materialrohr mit einem Strömungskanal, das in einem Düsenmundstück endet. Letzteres bildet endseitig eine Düsenaustrittsöffnung, die über eine Angussöffnung im Formeinsatz (Formnest) mündet. Damit sich die fließfähige Masse innerhalb des Materialrohrs nicht vorzeitig abkühlt, sind eine oder mehrere elektrische Heizeinrichtungen vorgesehen, die bis in das Düsenmundstück hinein für eine möglichst gleichmäßige Temperaturverteilung sorgen.

Die elektrische Heizeinrichtung kann beispielsweise als separates Bauelement mit einem wendelförmigen Heizelement ausgebildet sein, das in einer rohrförmigen Ummantelung integriert und umfangseitig auf das Materialrohr aufsetzbar ist. Die Ummantelung ist, wie beispielsweise in DE-U-295 07 848 oder US-PS-4,558,210 offenbart, ein starres Gebilde, das durch zusätzliche Halte- oder Spannelemente auf dem Materialrohr in axialer Richtung festgelegt wird. Alternativ kann man die Heizung als flexiblen Heizstreifen oder als flexible Heizmatte zwischen elektrisch isolierenden Schichten mit gegebenenfalls unterschiedlichen Wärmeleitungsvermögen ausbilden, die auf dem Außenumfang des Materialrohrs fixiert werden. EP-B1-0 028 153 sieht hierzu wärmeleitende Klebestreifen vor, während WO 97/03540 flexible Haltebänder mit Klett- oder Druckverschlüssen verwendet.

Ein Nachteile dieser bekannten Heizvorrichtungen besteht in den relativ großen Abmessungen, so dass den Heißkanaldüsen beim Einbau sehr viel Platz zur Verfügung gestellt werden muss, was bei den meisten Anwendungsfällen nicht wünschenswert ist, insbesondere dann, wenn kleine Nestabstände gefordert sind. Die relativ großen Dimensionen erfordern ferner eine höhere Heizleistung, was sich negativ auf den Energieverbrauch auswirkt. Hinzu kommt, dass die großen thermischen Massen die Aufheiz- und Abkühlphasen verlängern, wodurch sich Begrenzungen hinsichtlich erhöhter Produktivitätsraten ergeben.

Zur Behebung dieser Probleme schlägt DE-A-199 41 038 vor, auf zumindest einer einem Strömungskanal zugeordneten Wandung eines Materialrohrs wenigstens eine Isolierschicht und wenigstens eine Heizleiterbahnen aufweisende Heizschicht mittels Direktbeschichtung stoffschlüssig aufzubringen, also die Heizeinrichtung und das Materialrohr einteilig auszubilden. Die Direktbeschichtung kann dabei beispielsweise unter Verwendung der Folien-, Dickschicht- oder Siebdrucktechnik erfolgen, wobei die Schichten nach dem Auftragen jeweils separat oder simultan eingebrannt werden. Das stoffschlüssige Aufbringen der Heizeinrichtung in Schichten sorgt für eine dauerhaft feste Verbindung mit der Wandung des Strömungskanals und damit für einen festen Halt auf dem Heißkanalverteiler oder der Heißkanaldüse. Aufgrund der durch die Direktbeschichtung erzielten geringen Dickenabmessungen nimmt die Heizeinrichtung insgesamt nur wenig Raum ein, so dass sich im Vergleich zu den zuvor genannten Heizeinrichtungen bei nahezu gleichen Leistungsmerkmalen äußerst kompakte Bauformen realisieren lassen. Zudem kann die Leistungsdichte deutlich erhöht werden, da die Wärme direkt auf der Oberfläche des zu beheizenden Heißkanalelements erzeugt und abgenommen wird. Eine Überhitzung der meist empfindlichen Heizelemente wird dadurch vermieden. Ferner lässt sich die Düse rasch und präzise aufheizen und ebenso wieder abkühlen, was sich günstig auf den gesamten Produktionsablauf auswirkt.

Ein Nachteil dieser Heizeinrichtungen besteht allerdings darin, dass die Materialauswahl für die Heizschicht dahingehend beschränkt ist, dass man nur solche Materialien verwenden kann, deren Einbrenntemperatur derart gering ist, dass die Gefügestruktur des Materialrohrs, das gewöhnlich aus Werkzeugstahl gefertigt und ebenfalls den Einbrenntemperaturen ausgesetzt ist, während des Einbrennvorgangs nicht verändert wird. Die Einbrenntemperaturen der Heizleiterschichten darf daher die Vergütungstemperatur des Materialrohmaterials nicht übersteigen.

Ziel der Erfindung ist es, diese und weitere Nachteile des Standes der Technik zu vermeiden und eine verbesserte Heizeinrichtung zu schaffen, die einfach und kostengünstig herstellbar ist. Angestrebt wird insbesondere ein entsprechendes Herstellungsverfahren, ein verbessertes Heißkanalsystem sowie eine verbesserte Heißkanaldüse.

Hauptmerkmale der Erfindung sind im kennzeichnenden Teil der Ansprüche 1, 25, 27, 28, 31 und 32 angegeben. Ausgestaltungen sind Gegenstand der Ansprüche 2 bis 24, 26, 29 bis 30 und 33 bis 40.

Eine elektrische Heizeinrichtung für Heißkanalsysteme, insbesondere für Heißkanaldüsen und/oder Heißkanalverteiler, hat gemäß der vorliegenden Erfindung wenigstens ein rohrförmig oder hülsenartig ausgebildetes Trägerelement, das wenigstens einen Heizleiter trägt, wobei der Heizleiter von einem Widerstandsdraht gebildet ist

Durch den rohr- oder hülsenartigen Aufbau des Trägerelements kann die gesamte Heizeinrichtung auf ein Materialrohr einer Heißkanaldüse aufgeschoben werden, wodurch sich ein insgesamt zweiteiliger Aufbau bestehend aus Heizeinrichtung und Materialrohr ergibt. Die Heizeinrichtung ist entsprechend austauschbar. Alternativ kann man die Heizeinrichtung auch unmittelbar auf dem Materialrohr oder einem Verteiler ausbilden, so dass sich ein insgesamt kompakter Aufbau ergibt, der eine dauerhaft feste Verbindung und damit einen festen Halt auf dem Heißkanalverteiler oder der Heißkanaldüse gewährleistet. In jedem Fall nimmt die gesamte Heizvorrichtung nur wenig Raum ein, so dass sich im Vergleich zu anderen Heizeinrichtungen bei nahezu gleichen Leistungsmerkmalen äußerst kompakte Heißkanaldüsen realisieren lassen. Darüber hinaus lässt sich die Heizeinrichtung einfach und kostengünstig fertigen, was sich günstig auf die Herstellkosten auswirkt.

Oberhalb des den Heizleiter bildenden Widerstandsdrahts ist wenigstens eine elektrisch isolierende Abdeckschicht vorgesehen, welche den Heizleiter und das Trägerelement nach außen hin abdeckt und elektrisch isoliert. Die Abdeckschicht ist vorteilhaft als äußerste Schicht der Heizeinrichtung vorgesehen. verwenden kann, deren Einbrenntemperatur derart gering ist, dass die Gefügestruktur des Materialrohrs, das gewöhnlich aus Werkzeugstahl gefertigt und ebenfalls den Einbrenntemperaturen ausgesetzt ist, während des Einbrennvorgangs nicht verändert wird. Die Einbrenntemperaturen der Heizleiterschichten darf daher die Vergütungstemperatur des Materialrohmaterials nicht übersteigen.

WO 01/66333 A1 beschreibt eine elektrische Heizeinrichtung, die unmittelbar auf dem Materialrohr einer Spritzgießdüse aufgebracht wird, wobei ein Widerstandsdraht über einer elektrischen Isolierschicht, mit der das Materialrohr beschichtet ist, spiralförmig um das Materialrohr gewickelt wird. Der Widerstandsdraht wird mit einer sowohl thermischen als auch elektrischen Isolierschicht abgedeckt.

DE 103 33 206 A1 offenbart eine elektrische Heizeinrichtung, die mit einer durchgängigen zentralen Passbohrung zur spaltfreien Aufnahme einer zu beheizenden Spritzgießdüse versehen ist. Die Heizeinrichtung hat einen inneren und einen äußeren Metallmantel. Diese bilden eine stirnseitig verschlossene Ringkammer, die mit einer keramischen Isoliermasse oder einem Metalloxid verfüllt ist. In der Masse oder dem Metalloxid ist ein Heizdraht eingebettet.

Ziel der Erfindung ist es, diese und weitere Nachteile des Standes der Technik zu vermeiden und eine verbesserte Heizeinrichtung zu schaffen, die einfach und kostengünstig herstellbar ist. Angestrebt wird insbesondere ein entsprechendes Herstellungsverfahren, ein verbessertes Heißkanalsystem sowie eine verbesserte Heißkanaldüse.

Hauptmerkmale der Erfindung sind im kennzeichnenden Teil der Ansprüche 1, 11 und 12 angegeben. Ausgestaltungen sind Gegenstand der Ansprüche 2 bis 10 und 13.

Eine elektrische Heizeinrichtung für Heißkanalsysteme, insbesondere für Heißkanaldüsen und/oder Heißkanalverteiler, hat gemäß der vorliegenden Erfindung wenigstens ein rohrförmig oder hülsenartig ausgebildetes Trägerelement, das wenigstens einen Heizleiter trägt, wobei der Heizleiter von einem Widerstandsdraht gebildet ist

Durch den rohr- oder hülsenartigen Aufbau des Trägerelements kann die gesamte Heizeinrichtung auf ein Materialrohr einer Heißkanaldüse aufgeschoben werden, wodurch sich ein insgesamt zweiteiliger Aufbau bestehend aus Heizeinrichtung und Materialrohr ergibt. Die Heizeinrichtung ist entsprechend austauschbar. Es ergibt sich ein insgesamt kompakter Aufbau, der eine dauerhaft feste Verbindung und damit einen festen Halt auf dem Heißkanalverteiler oder der Heißkanaldüse gewährleistet. In jedem Fall nimmt die gesamte Heizvorrichtung nur wenig Raum ein, so dass sich im Vergleich zu anderen Heizeinrichtungen bei nahezu gleichen Leistungsmerkmalen äußerst kompakte Heißkanaldüsen realisieren lassen. Darüber hinaus lässt sich die Heizeinrichtung einfach und kostengünstig fertigen, was sich günstig auf die Herstellkosten auswirkt.

Oberhalb des den Heizleiter bildenden Widerstandsdrahts ist wenigstens eine elektrisch isolierende Abdeckschicht vorgesehen, welche den Heizleiter und das Trägerelement nach außen hin abdeckt und elektrisch isoliert. Die Abdeckschicht ist vorteilhaft als äußerste Schicht der Heizeinrichtung vorgesehen.

Zur Erfassung der Ist-Temperatur im Strömungskanal ist vorteilhaft wenigstens ein Temperaturfühler vorgesehen, dessen elektrischer Widerstand temperaturabhängig ist. Anhand des sich ändernden elektrischen Widerstandes kann kontinuierlich die Ist-Temperatur bestimmt werden, wobei die Messwerte zur Regelung der erfindungsgemäßen Heizeinrichtung verwendbar sind. Der Temperaturfühler kann herkömmlich ausgebildet oder als elektrisch leitfähige Schicht ausgebildet sein, deren elektrischer Widerstand temperaturabhängig ist. Anhand des sich ändernden elektrischen Widerstandes kann kontinuierlich die Ist-Temperatur bestimmt werden, wobei die Messwerte zur Regelung der erfindungsgemäßen Heizeinrichtung verwendbar sind. Die als Temperaturfühler dienende Schicht weist bevorzugt ein PTC- oder NTC-Material auf. Alternativ ist ein Thermoelement als Temperaturfühler mit der gleichen Strukturierung wie ein Widerstandsfühler und dem Messpunkt nahe der Düsenspitze möglich.

Der Temperaturfühler und der Heizleiter liegen in radialer Richtung vorteilhaft in einer gemeinsamen Ebene, wodurch der Bauraum der erfindungsgemäßen Heizeinrichtung zusätzlich reduziert werden kann.

Das Trägerelement ist vorteilhaft aus einem Sintermaterial, wie beispielsweise einer Keramik oder einem Sintermetall gefertigt. Man kann aber auch ein Metall eine Metalllegierung, einen Stahl oder eine Stahllegierung verwenden. Die Verwendung einer Keramik hat den Vorteil, dass der Heizleiter bzw. der Widerstandsdraht unmittelbar auf das Trägerelement aufgebracht werden kann. Verwendet man ein Metall, z.B. einen Werkzeugstahl, ein Hartmetall o.dgl., oder auch einen Stahl, so wird zwischen dem Trägerelement und dem Heizleiter eine Isolierschicht angeordnet, um den Widerstandsdraht gegenüber dem Trägerelement elektrisch zu isolieren. Eine solche Isolier- oder Zwischenschicht kann aber auch auf einem keramischen Trägerelement vorgesehen sein, um beispielsweise die Haftung zu verbessern.

Sowohl die Abdeckschicht als auch die als Zwischenschicht dienende Isolierschicht sind bevorzugt eine glasartige und/oder keramische Dielektrikumschicht, die nach zumindest einem Einbrennprozess gegenüber dem Trägerelement unter Druckvorspannung steht, so dass bei der Innendruckbelastung des Trägerelementes radienabhängig in unterschiedlicher Höhe auftretende Delaminationskräfte innerhalb der Isolierschicht kompensiert werden. Die Druckvorspannung wird bevorzugt erzeugt, indem in Abhängigkeit von den dehnungsrelevanten Kenngrößen des Trägerelementes fallweise eine jeweils spezifische Fehlanpassung des linearen Ausdehnungskoeffizienten der keramischen Isolierschicht TEC_{DE} bzw. des linearen thermischen Ausdehnungskoeffizienten TEC_{DEA} der Abdeckschicht an den entsprechenden Wert des Trägerelementes TEC_{M} vorgegeben wird, wobei die Differenzausdehnung TEC_{DE}-TEC_{M} bzw. TEC_{DEA}-TEC_{M} einen Wert von 5 · 10⁻⁶K⁻¹ nicht überschreitet.

Darüber hinaus weist die Isolierschicht und/oder die Abdeckschicht bevorzugt die Eigenschaft auf, bei der jeweiligen Einbrenntemperatur die Trägeroberfläche zu benetzen. Unter bestimmten Umständen ist es dabei vorteilhaft, dass das Materialsystem zumindest teilweise in den kristallinen Zustand übergeht.

Die Isolierschicht und/oder die Abdeckschicht kann ein glasiges oder glasig-kristallines Materialsystem aufweisen, das wenigstens ein vorgebildetes Glas enthält, welches bei einer vorgebbaren Einbrenntemperatur die Oberfläche des Trägerelements benetzt. Das Materialsystem kann ferner wenigstens ein vorgebildetes Glas enthalten, welches bei einer vorgebbaren Einbrenntemperatur zumindest teilweise in einen kristallinen Zustand übergeht.

Zusätzlich bzw. alternativ kann das Materialsystem mindestens ein weiteres, unter Einbrennbedingungen nicht kristallisierendes Glas und/oder mindestens eine a priori kristalline Verbindung enthalten, wobei durch Optimierung der Mengenanteile der vorgebildeten glasigen und kristallinen Bestandteile des Materialsystems unter Berücksichtigung ihrer jeweiligen TEC-Inkremente unter den Bedingungen des jeweiligen Einbrennvorgangs eine keramische Dielektrikumschicht mit einem TEC-Wert im Bereich zwischen 0 und 13·10⁻⁶K⁻¹ erhalten wird.

Zwischen dem Trägerelement und der Isolierschicht ist eine Ausgleichsschicht angeordnet, die beispielsweise aus chemischem Nickel besteht. Eine solche Ausgleichsschicht dient ebenfalls dem Ausgleich unterschiedlicher Wärmeausdehnungskoeffizienten zwischen Trägermaterial und Isolierschicht. Die Ausgleichsschicht kann in gleicher Weise wie die Isolierschicht und die Abdeckschicht aufgebracht werden.

Die Isolierschicht, die Abdeckschicht und/oder die Ausgleichsschicht sind eingebrannte Folien oder eingebrannte Dickschichtpasten. Alternativ ist auch ein Tauchbeschichten (Dippvorgang) mit anschließendem Einbrennen möglich.

Zweckmäßig bildet der Widerstandsdraht eine Heizleiterwendel, wobei die Ausbildung und/oder die Anordnung des Widerstandsdrahts an den jeweiligen Heizleistungsbedarf angepasst ist. Dadurch können die in einem besonders stark zu erwärmenden Bereich anzuordnenden Wicklungen oder Windungen des Widerstandsdrahts beispielsweise besonders dicht angeordnet sein, um in diesem Abschnitt entsprechend mehr Wärmeenergie einzubringen. Wird der Widerstandsdraht zudem wendel- oder mäanderförmig ausgebildet, so kann ferner die Wendelsteigung abschnittsweise geringer oder größer gewählt werden, um die Wärmeenergieabgabe zu variieren. Auch der Querschnitt des Widerstandsdrahtes kann bei Bedarf variieren.

Zwischen der Isolierschicht, dem Heizleiter und/oder dem Temperaturfühler kann jeweils eine Kontaktschicht angeordnet sein. Auch bei dieser und/oder bei dem Temperaturfühler und/oder bei der zwischen Trägerelement und Heizleiter angeordneten isolierenden bzw. haftvermittelnden Zwischenschicht (Isolierschicht) handelt es sich bevorzugt wahlweise um eingebrannte Folien oder eingebrannte Dickschichtpasten. Diese lassen sich einfach und kostengünstig aufbringen, insbesondere strukturieren und handhaben, so dass sich äußerst zuverlässige und günstige Heizvorrichtung herstellen lassen.

Insgesamt bilden die Isolierschicht und/oder die Abdeckschicht und/oder die Ausgleichsschicht und/oder die Kontaktschicht und/oder die als Temperaturfühler dienende Schicht einen den Widerstandsdraht einbettenden Schichtverbund, so dass stets ein kompakter Aufbau der erfindungsgemäßen Heizeinrichtung erzielt wird. Dies gilt insbesondere dann, wenn der den Heizleiter bildende Widerstandsdraht in die Isolierschicht und/oder in die Kontaktschicht eingebettet ist.

Die vorliegende Erfindung bezieht sich ferner auf ein Heißkanalsystem, insbesondere eine Heißkanaldüse oder einen Heißkanalverteiler mit einer elektrischen Heizeinrichtung der zuvor beschriebenen Art. Das rohrförmig oder hülsenartig ausgebildete Trägerelement ist dabei auf ein Materialrohr, einen Stab, einen Verteilerarm, eine Düse o.dgl. aufgesetzt bzw. aufgeschoben.

Zudem bezieht sich die vorliegende Erfindung auf eine Heißkanaldüse mit einer erfindungsgemäßen elektrischen Heizeinrichtung, wobei das rohrförmig oder hülsenartig ausgebildete Trägerelement auf ein Materialrohr unter Bildung einer Passung mit vorbestimmtem Spiel aufgesetzt ist. Auch hier kann das Trägerelement das Materialrohr bilden, was sich günstig auf den Wärmeübergang auswirkt.

Schließlich betrifft die vorliegende Erfindung ein Verfahren zur Herstellung einer erfindungsgemäßen elektrischen Heizeinrichtung für Heißkanalsysteme, insbesondere für Heißkanaldüsen und/oder Heißkanalverteiler, wobei der den Heizleiter bildende Widerstandsdraht auf das Trägerelement aufgebracht wird und dass anschließend die Abdeckschicht in Folien- oder Siebdrucktechnik aufgebracht wird. Sowohl das Aufbringen des Widerstandsdrahts als auch der Abdeckschicht ist gut beherrschbar und in Kombination überraschend günstig realisierbar. Die erzeugte Heizeinrichtung arbeitet präzise und dauerhaft zuverlässig, was sich insgesamt günstig auf die Temperaturverteilung und auf die Standzeit der Heizelemente auswirkt.

Je nach Ausbildung des Trägerelements wird vor dem Aufwickeln des die Heizleiterwendel bildenden Widerstandsdrahts die Isolierschicht in Folien- oder Siebdrucktechnik auf dem Trägerelement aufgebracht, wobei der Widerstandsdraht zweckmäßig in die Isolierschicht eingebettet wird.

Die in Siebdrucktechnik aufgebrachten Schichten werden vorteilhaft unter Verwendung der Runddrucktechnologie in Form von Pasten aufgebracht, was eine insgesamt ökonomische Verfahrensführung gewährleistet. Dabei kann jede Schicht separat aufgetragen und anschließend eingebrannt werden; die Einbrenntemperatur kann für jede Schicht variieren. Man kann die Einbrenntemperatur aber auch für jede Schicht einzeln variieren und nach jedem Einbrennschritt absenken. Eine weitere Ausgestaltung des erfindungsgemäßen Verfahrens sieht vor, dass alle Schichten separat aufgetragen und simultan eingebrannt werden (co-firing). Der Einbrenn-Temperaturbereich liegt zwischen 800 und 1400°C.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Schnittansicht einer erfindungsgemäßen Heißkanaldüse mit einer ersten Ausführungsform einer erfindungsgemäßen Heizeinrichtung;
- Fig. 2: die in Fig. 1 dargestellte Heizeinrichtung in einer abgewickelten und teilweise aufgefächerten Darstellung;
- Fig. 3: die Heizeinrichtung von Fig. 1 und 2 mit einem Thermofühler in abgewickelter Darstellung;
- Fig. 4: eine andere Art der Heizungs- und Thermofühler-Anordnung;
- Fig. 5: eine noch andere Ausführungsform einer Heizung mit Thermofühler und
- Fig. 6: eine alternative Ausführungsform einer erfindungsgemäßen Heizeinrichtung in einer abgewickelten und teilweise aufgefalteten Darstellung.

Gleiche Bezugsziffern beziehen sich nachfolgend auf gleichartige Bauteile.

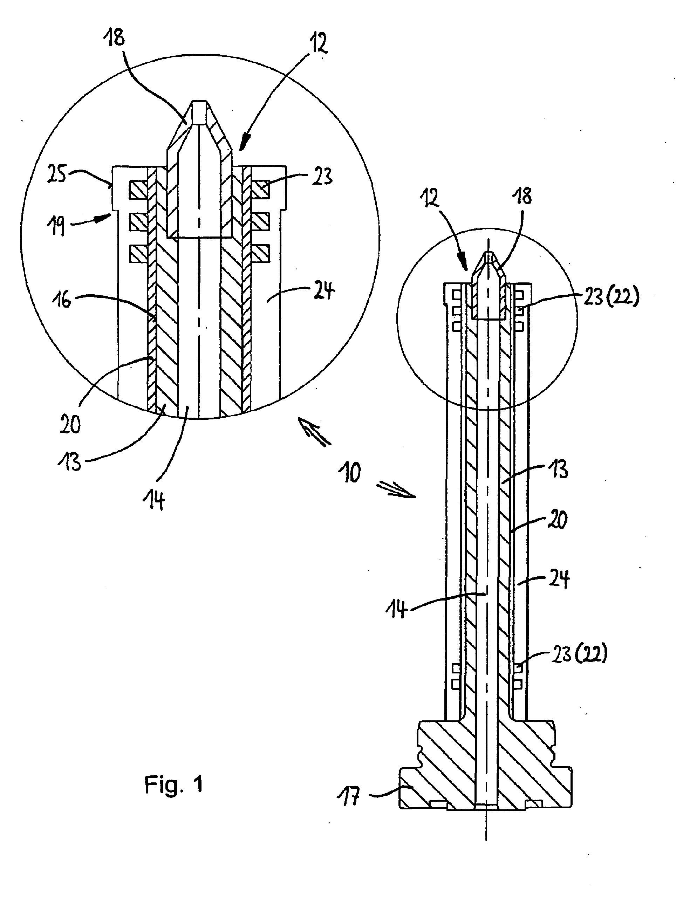

Die in Fig. 1 skizzierte Heißkanaldüse 12 hat als Bestandteil einer Spritzgussanlage für thermoplastische Kunststoffverarbeitung zur Festlegung an einem (nicht dargestellten Verteiler ein (ebenfalls nicht gezeigtes) Gehäuse, in das ein insgesamt zylindrisches Materialrohr 13 einsetzbar ist. Ein an diesem endseitig ausgebildeter Sockel 17 schließt bündig mit dem Gehäuse ab und liegt dichtend an dem Verteiler an. In das sich in Axialrichtung längs erstreckende Materialrohr 13 ist endseitig eine Düsenspitze 18 eingesetzt, vorzugsweise eingeschraubt, die den in dem Materialrohr 13 ausgebildeten Strömungskanal 14 bis an die (nicht dargestellte) Ebene eines (ebenfalls nicht sichtbaren) Formnests fortsetzt. Die Düsenspitze 18 kann auch bei gleicher Funktionsweise mit dem Materialrohr 13 einstückig ausgebildet sein.

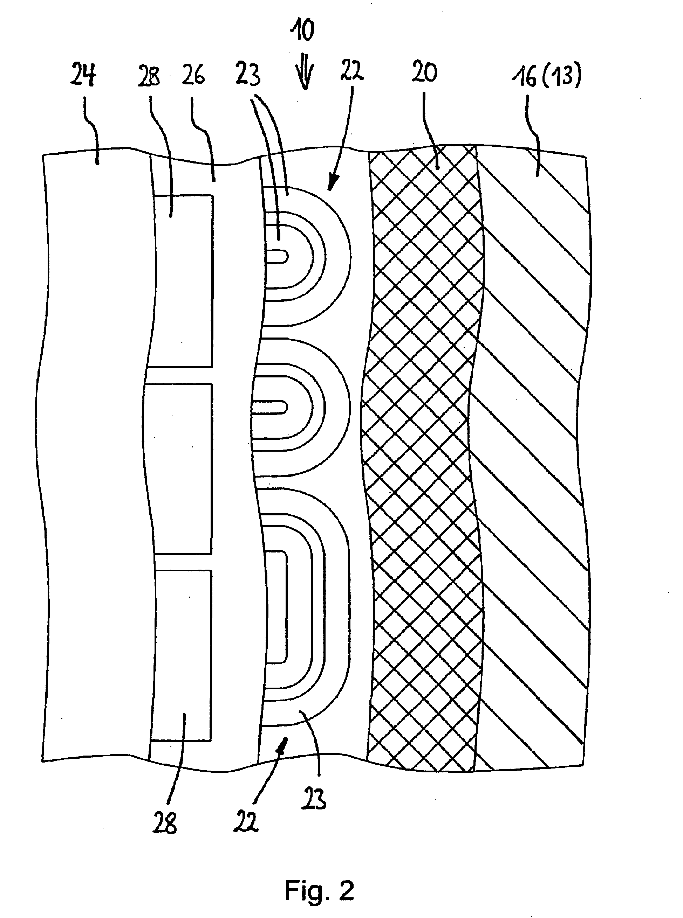

Auf dem Außenumfang der Wandung 16 des beispielsweise aus Stahl gefertigten Materialrohrs 13 ist eine Heizeinrichtung 10 aufgesetzt. Diese umfasst ein hülsenartiges, keramisches Trägerelement 20, das gleichzeitig als elektrische Isolierung dient, ein darauf aufgewickelter Widerstandsdraht 23 bildet eine Heizleiterwendel 22, die - wie in Fig. 2 schematisch angedeutet - je nach gewünschter Temperaturdichte auch mäanderförmig verlegt sein kann. Über dem Widerstandsdraht 23 ist eine äußere Abdeckschicht 24 aufgebracht, welche die Heizleiterwendel 22 und das darunter liegende Trägerelement 20 nach außen hin abdeckt und elektrisch isoliert. Der beliebig verlegbare Widerstandsdraht 23 kann je nach erforderlicher Leistung in unterschiedlicher Dicke und/oder Anordnung auf dem Trägerelement 20 aufgebracht sein. Hierdurch lässt sich bei Bedarf eine definierte Temperaturverteilung innerhalb des Materialrohrs 13 erzielen.

Um sowohl den Anstieg als auch den Verlauf der Temperatur innerhalb des Materialrohrs 13 bzw. innerhalb der Wandung 16 verfolgen bzw. kontrollieren und regeln zu können, ist zwischen dem Trägerelement 20 und der Abdeckschicht 24 ein Temperaturfühler 28 aus einem PTC-Material vorgesehen, dessen Widerstand mit steigender Temperatur zunimmt (Fig. 2). Für einen besseren Wärmekontakt kann sich zwischen dem Widerstandsdraht 23 und dem Temperaturfühler 28 eine elektrisch isolierende Kontaktschicht 26 befinden, die bei Bedarf auch zwischen weiteren Schichten vorgesehen sein kann.

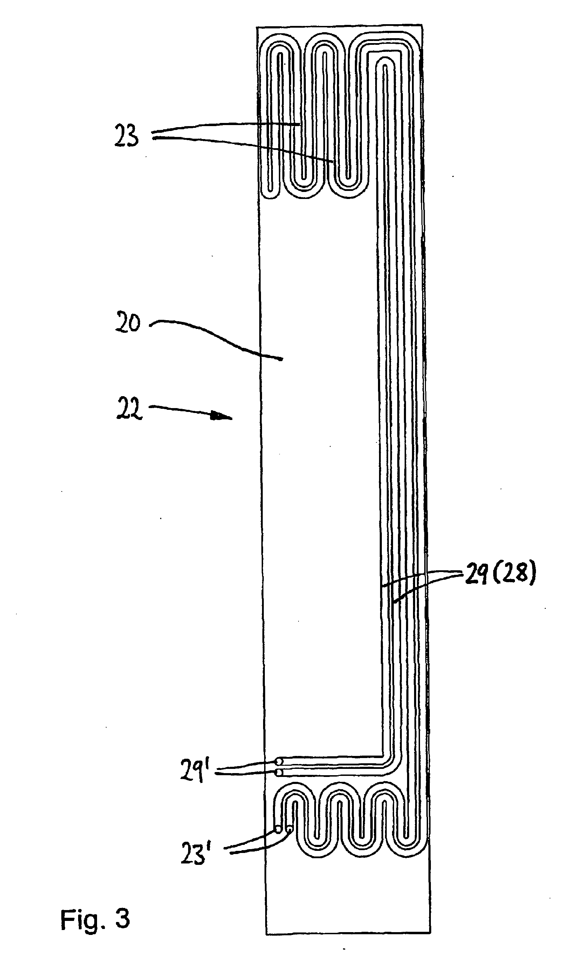

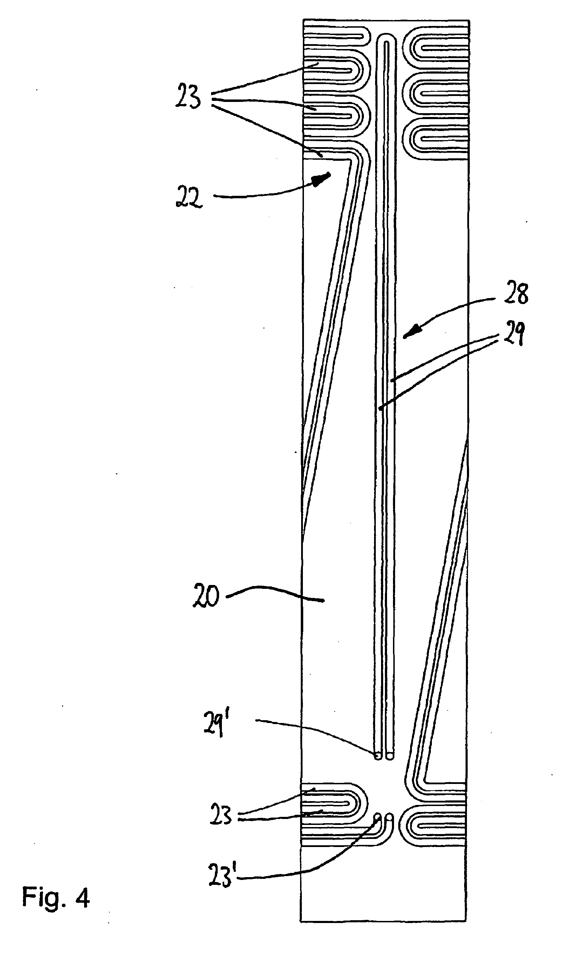

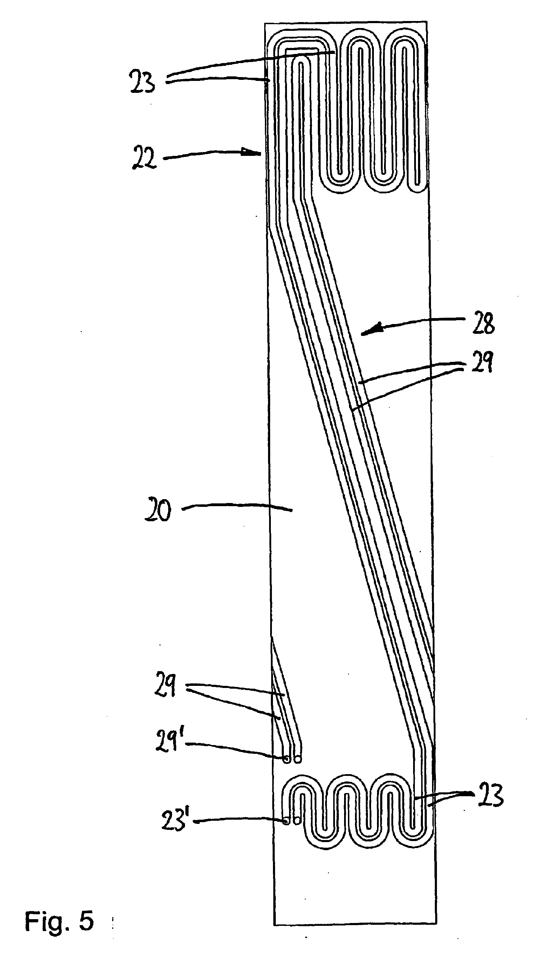

Der Temperaturfühler 28 kann ebenso wie die Heizleiterwendel 22 aus Widerstandsdraht 29 gefertigt sein (siehe Fig. 3 und 4). Der den Temperaturfühler 28 bildende Widerstandsdraht 29 liegt dabei zweckmäßig in der gleichen Ebene wie der die Heizleiterwendel 22 bildende Widerstandsdraht 23. Sie werden gemeinsam von der Abdeckschicht 24 nach außen hin geschützt. Auf diese Weise ist die Höhe der Heizeinrichtung 10 auf ein Minimum reduziert. Die Fig. 3, 4 und 5 zeigen alternative Möglichkeiten für eine Gestaltung der Heizleiterwendel 22 sowie der Leiterbahnen 29 für die Temperaturmessung.

Die Abdeckschicht 24 und/oder die Kontaktschicht 26 werden bevorzugt mittels Direktbeschichtung stoffschlüssig auf das Trägerelement 20 aufgetragen und anschließend unter den jeweils materialspezifisch vorgegebenen Einbrennbedingungen eingebrannt, so dass ein stoffschlüssiger Verbund entsteht, der die Heizeinrichtung 10 bildet. Da der Widerstandsdraht 23 der Heizleiterwendel 22 und die einzelnen Funktionsschichten 24, 26 (gegebenenfalls 28) untereinander eine außerordentlich gute Haftfähigkeit aufweisen, hält die Heizeinrichtung 10 insgesamt selbst extremen mechanischen und/oder thermischen Belastungen dauerhaft stand.

Die Heizeinrichtung 10 wird von unten auf das Materialrohr 13 mit einem vorbestimmten Spiel aufgeschoben, das derart gewählt ist, dass die Heizeinrichtung 10 im aufgeheizten Betriebszustand nicht durch das sich unter der Wärmeeinwirkung ausdehnende Materialrohr 13 beschädigt wird, jedoch ein stets ein optimaler Wärmeübergang zwischen dem Trägerelement 20 und dem Materialrohr 13 sichergestellt ist.

Ein besserer Wärmeübergang kann durch ein zusätzliches Anrauen der Innenseite des Trägerelementes bzw. der Außenseite des Materialrohrs bewirkt werden.

Zur besseren Wärmeübertragung kann auch die Innenseite des Trägerelementes bzw. die Außenseite des Materialrohrs mit einer dunklen oder schwarzen Schicht versehen werden. Diese Schicht kann aus einer schwarzen Farbe bestehen, wie sie beim Bau von Strahlungsheizelementen verwendet wird. Alternativ oder zusätzlich kann auch ein dunkles Material für das Trägerrohr verwendet werden, wie beispielsweise schwarzes Aluminiumoxid. Wir ein metallisches Trägerrohr verwendet, kann durch den Einbrennvorgang ein dunkles Anlaufen des Metalls an der Innenseite des Rohrs bewirkt werden.

Als Beschichtungsverfahren zum Auftragen der einzelnen Funktionsschichten eignet sich die Folien- und die Dickschicht-Siebdrucktechnik, für das Auftragen der Isolierschicht oder der Abdeckschicht ggf. auch die Detonationsbeschichtung oder thermische Beschichtungsmethoden. Bevorzugt verwendet man allerdings die Dickschicht-Siebdrucktechnik unter Anwendung der Runddrucktechnologie. Das Einbrennen der Schichten kann einzeln oder gemeinsam erfolgen.

Die elektrischen Anschlüsse 23' und 29' für die Widerstandsdrähte 23, 29 von Heizleiterwendel 22 und Temperaturfühler 28 können ebenfalls in Dickschichttechnik oder herkömmlich ausgeführt sein, wobei die hierfür erforderlichen Kontakte derart gestaltet sind, dass die Leistungszufuhr bzw. Informationsübertragung über steckbare Kabelverbindungen erfolgen kann.

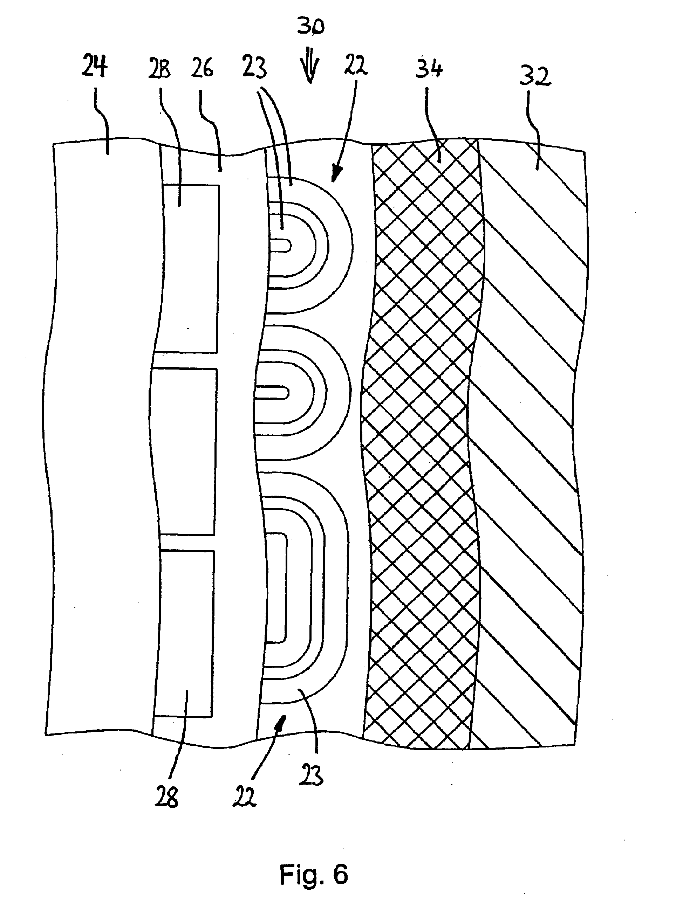

Fig. 6 zeigt eine alternative Ausführungsform einer erfindungsgemäßen Heizeinrichtung 30 in einer abgewickelten und teilweise aufgefächerten Darstellung. Die Heizeinrichtung 30 umfasst ein rohr- oder hülsenartiges Trägerelement 32, das im Wesentlichen dem Trägerelement 20 der in den Fig. 1 und 2 dargestellten Heizeinrichtung 10 entspricht, jedoch nicht aus Keramik sondern das aus einem Metall oder einer Metalllegierung hergestellt ist. Zur elektrischen Isolierung ist auf dem Trägerelement 20 eine Isolierschicht bzw. Dielektrikumschicht 34 angeordnet, auf der dann der Reihe die Heizleitervvendel 22, ggf. die Kontaktschicht 26, der Temperaturfühler 28 und die Abdeckschicht 24 aufgebracht sind, ebenso wie bei der in Fig. 2 dargestellten Heizeinrichtung 10. Das Auftragen der einzelnen Funktionsschicht erfolgt in gleicher Weise wie bei der Heizeinrichtung 10.

Auf die zwecks verbesserter Haftfestigkeit in bekannter Weise aufgeraute Oberfläche des Trägerelements 32 wird zur Erzeugung der Dielektrikumschicht 34 im Runddruckverfahren eine Dickschicht-Dielektrikumspaste aufgebracht. Deren Feststoffanteil kann z.B. aus einem im Temperaturbereich oberhalb 900°C in situ kristallisierenden Glas mit den Hauptkomponenten BaO, Al₂O₃ und SiO₂ in der näherungsweise molaren Zusammensetzung BaO Al₂O₃ 4 SiO₂ bestehen. Die nach dem Einbrennen erhaltene Dielektrikumschicht 32 besitzt einen TEC von 6 · 10⁻⁶K⁻¹ im Temperaturbereich 20 bis 300 °C.

Bedingt durch den hierdurch entstehenden TEC-Mismatch zwischen Metallwandung 16 und Dielektrikumschicht 34 in der Größenordnung 5 ·10⁻⁶K⁻¹ ist beim Abkühlen der mit dem Dielektrikum beschichteten Wandung 16 des Trägerelementes 32 im Temperaturbereich der reinelastischen Deformation, d.h. zwischen der Transformationstemperatur des Glases von etwa 700 °C und Raumtemperatur, mit dem Aufbau einer Druckspannung von etwa 3500 bar zu rechnen (bei einem angenommenen E-Modul der Dielektrikumschicht 34 von 2·10⁶ bar). Die Höhe der Druckvorspannung erreicht noch nicht den kritischen Grenzbereich der Eigendruckfestigkeit des Dielektrikums, der oberhalb von 6000 bar beginnt. Sie ist jedoch ausreichend, um das Auftreten von Zugspannungen in der Dielektrikumschicht 34 und damit auch in den nachfolgenden Schichten zuverlässig zu verhindern, wenn die Wandung 16 des Trägerelementes 32 bei einer Belastung von 2000 bar zyklisch gedehnt wird.

Die Erfindung ist nicht auf eine der zuvor beschriebenen Ausführungsformen beschränkt. Vielmehr sind Modifikationen und Änderungen möglich, ohne den Schutzbereich der vorliegenden Erfindung zu verlassen, der durch die beiliegenden Ansprüche definiert ist.

### Bezugszeichenliste

- 10: Heizung
- 12: Heißkanaldüse
- 13: Materialrohr
- 14: Strömungskanal
- 16: Wandung
- 17: Sockelbereich
- 18: Düsenspitze
- 20: Trägerelement
- 22: Heizleiterwendel
- 23: Widerstandsdraht
- 23': Anschluss
- 24: Abdeckschicht
- 26: Kontaktschicht
- 28: Temperaturfühler
- 29: Leiterbahnen
- 29': Anschluss
- 30: Heizeinrichtung
- 32: Trägerelement
- 34: Dielektrikumschicht

## Patentansprüche

1. Elektrische Heizeinrichtung (10; 30) für Heißkanalsysteme, insbesondere für Heißkanaldüsen (12) und/oder Heißkanalverteiler, mit wenigstens einem rohrförmig oder hülsenartig ausgebildeten Trägerelement (20; 32), das wenigstens einen Heizleiter (22) trägt, wobei der Heizleiter (22) von einem Widerstandsdraht (23) gebildet ist, wobei der den Heizleiter (22) bildende Widerstandsdraht (23) von wenigstens einer elektrisch isolierenden Abdeckschicht (24) abgedeckt ist, wobei zwischen dem Trägerelement (20; 32) und dem Widerstandsdraht (23) eine Isolierschicht (34) angeordnet ist und wobei das Trägerelement (20, 32) auf ein Materialrohr (13) einer Heißkanaldüse (12) aufschiebbar oder aufsetzbar ist, **dadurch gekennzeichnet, dass** zwischen dem Trägerelement (20; 32) und der Isolierschicht (34) eine Ausgleichsschicht angeordnet ist, dass die Isolierschicht (34), die Abdeckschicht (24) und/oder die Ausgleichsschicht eingebrannte Folien oder eingebrannte Dickschichtpasten sind, die in Folien- oder Siebdrucktechnik auf dem Trägerelement aufgebracht sind, und dass die Isolierschicht (34) und/oder die Abdeckschicht (24) und/oder die Ausgleichsschicht nach zumindest einem Einbrennprozess gegenüber dem Trägerelement (20, 32) unter Druckvorspannung stehen.

2. Heizeinrichtung nach Anspruch 1, **dadurch gekennzeichnet, dass** wenigstens ein Temperaturfühler (28) vorgesehen ist, wobei der Temperaturfühler (28) als elektrisch leitfähige Schicht ausgebildet ist, deren elektrischer Widerstand temperaturabhängig ist.

3. Heizeinrichtung nach Anspruch 2, **dadurch gekennzeichnet, dass** der Temperaturfühler (28) und der den Heizleiter (22) bildende Widerstandsdraht (23) in radialer Richtung in einer gemeinsamen Ebene liegen.

4. Heizeinrichtung nach einem der Ansprüche 1 bis 3, **dadurch gekennzeichnet, dass** das Trägerelement (20; 32) aus einem Sintermaterial gefertigt ist, wobei das Sintermaterial eine Keramik, ein gesintertes Metall oder eine gesinterte Metalllegierung ist.

5. Heizeinrichtung nach einem der Ansprüche 1 bis 4, **dadurch gekennzeichnet, dass** das Trägerelement (20; 32) aus Metall, aus einer Metalllegierung, aus Stahl oder aus einer Stahllegierung gefertigt ist.

6. Heizeinrichtung nach einem der Ansprüche 1 bis 5, **dadurch gekennzeichnet, dass** die Isolierschicht (34) und/oder die Abdeckschicht (24) und/oder die Ausgleichsschicht eine glasartige und/oder keramische Dielektrikumschicht ist.

7. Heizeinrichtung nach einem der Ansprüche 1 bis 6, **dadurch gekennzeichnet, dass** der lineare thermische Ausdehnungskoeffizient (TEC_{DE}) der Isolierschicht (34) und/oder der lineare thermische Ausdehnungskoeffizient (TEC_{DEA}) der Abdeckschicht (24) und/oder der lineare thermische Ausdehnungskoeffizient (TEC_{DEA}) der Ausgleichsschicht nach dem Einbrennprozess kleiner ist als der lineare thermische Ausdehnungskoeffizient (TEC_{M}) des Trägerelements (20; 32).

8. Heizeinrichtung nach einem der vorhergehenden Ansprüche, **dadurch gekennzeichnet, dass** der Widerstandsdraht (23) eine Heizleiterwendel bildet, wobei die Ausbildung und/oder die Anordnung des Widerstandsdrahts (23) an den jeweiligen Heizleistungsbedarf angepasst sind.

9. Heizeinrichtung nach einem der vorhergehenden Ansprüche, **dadurch gekennzeichnet, dass** zwischen der Isolierschicht (34), dem den Heizleiter (22) bildenden Widerstandsdraht (23) und/oder dem Temperaturfühler (28) jeweils eine Kontaktschicht (26) angeordnet ist.

10. Heizeinrichtung nach einem der vorhergehenden Ansprüche, **dadurch gekennzeichnet, dass** die Isolierschicht (34) und/oder die Abdeckschicht (24) und/oder die Ausgleichsschicht und/oder die Kontaktschicht (26) und/oder die als Temperaturfühler dienende Schicht (28) einen den Widerstandsdraht (23) einbettenden Schichtverbund bilden, wobei der den Heizleiter (22) bildende Widerstandsdraht (23) in die Isolierschicht (34) und/oder in die Kontaktschicht (26) eingebettet ist.

11. Heißkanaldüse mit einer elektrischen Heizeinrichtung (10; 30) nach einem der Ansprüche 1 bis 10, **dadurch gekennzeichnet, dass** die elektrische Heizeinrichtung (10; 30) auf ein zylindrisches Materialrohr (13) unter Bildung einer Passung mit vorbestimmtem Spiel aufgesetzt ist.

12. Verfahren zur Herstellung einer elektrischen Heizeinrichtung (10; 30) für Heißkanalsysteme, insbesondere für Heißkanaldüsen (12) und/oder für Heißkanalverteiler, nach einem der Ansprüche 1 bis 10, **dadurch gekennzeichnet, dass** der den Heizleiter (22) bildende Widerstandsdraht (23) auf das Trägerelement (20; 32) aufgebracht wird und dass anschließend die Abdeckschicht (24) in Folien- oder Siebdrucktechnik aufgebracht wird.

13. Verfahren nach Anspruch 12, **dadurch gekennzeichnet, dass** vor dem Aufbringen des Widerstandsdrahts (23) die Isolierschicht (34) in Folien- oder Siebdrucktechnik auf dem Trägerelement (20; 32) aufgebracht wird, wobei der Widerstandsdraht (23) in die Isolierschicht (34) eingebettet wird.

## Claims

1. Electric heating device (10; 30) for hot runner systems, in particular for hot runner nozzles (12) and/or hot runner manifolds, comprising at least one tubular or sleeve-like support element (20; 32) which supports at least one heating conductor (22), the heating conductor (22) being formed by a resistance wire (23), the resistance wire (23) forming the heating conductor (22) being covered by at least one electrically insulating cover layer (24), an insulating layer (34) being arranged between the support element (20; 32) and the resistance wire (23), and the support element (20; 32) being able to be pushed or fitted onto a material tube (13) of a hot runner nozzle (12), **characterised in that** a compensation layer is arranged between the support element (20; 32) and the insulating layer (34), **in that** the insulating layer (34), the cover layer (24) and/or the compensation layer are stoved films or stoved thick film pastes which are applied to the support element using film or screen-printing techniques, and **in that** the insulating layer (34) and/or the cover layer (24) and/or the compensation layer (20; 32) are under compressive stress with respect to the support element (20; 32) after at least one stoving process.

2. Heating device according to claim 1, **characterised in that** at least one temperature sensor (28) is provided, the temperature sensor (28) being designed as an electrically conductive layer, the electrical resistance of which is temperature dependent.

3. Heating device according to claim 2, **characterised in that** the temperature sensor (28) and the resistance wire (23) forming the heating conductor (22) are in a common plane in the radial direction.

4. Heating device according to any of claims 1 to 3, **characterised in that** the support element (20; 32) is made of a sintered material, the sintered material being a ceramic, a sintered metal or a sintered metal alloy.

5. Heating device according to any of claims 1 to 4, **characterised in that** the support element (20; 32) is made of metal, a metal alloy, steel or a steel alloy.

6. Heating device according to any of claims 1 to 5, **characterised in that** the insulating layer (34) and/or the cover layer (24) and/or the compensation layer is a vitreous and/or ceramic dielectric layer.

7. Heating device according to any of claims 1 to 6, **characterised in that** the linear thermal coefficient of expansion (TEC_{DE}) of the insulating layer (34) and/or the linear thermal coefficient of expansion (TEC_{DEA}) of the cover layer (24) and/or the linear thermal coefficient of expansion (TEC_{DEA}) of the compensation layer is less, after the stoving process, than the linear thermal coefficient of expansion (TEC_{M}) of the support element (20; 32).

8. Heating device according to any of the preceding claims, **characterised in that** the resistance wire (23) forms a heating conductor coil, the configuration and/or the arrangement of the resistance wire (23) being adapted to the respective heat output requirements.

9. Heating device according to any of the preceding claims, **characterised in that** a contact layer (26) is arranged in each case between the insulating layer (34), the resistance wire (23) forming the heating conductor (22) and/or the temperature sensor (28).

10. Heating device according to any of the preceding claims, **characterised in that** the insulating layer (34) and/or the cover layer (24) and/or the compensation layer and/or the contact layer (26) and/or the layer (28) acting as the temperature sensor form a layered compound which embeds the resistance wire (23), the resistance wire (23) which forms the heating conductor (22) being embedded into the insulating layer (34) and/or into the contact layer (26).

11. Hot runner nozzle comprising an electrical heating device (10; 30) according to any of claims 1 to 10, **characterised in that** the electrical heating device (10; 30) is fitted onto a cylindrical material tube (13), thus forming a fit having predetermined play.

12. Method for producing an electrical heating device (10; 30) for hot runner systems, in particular for hot runner nozzles (12) and/or for hot runner manifolds according to any of claims 1 to 10, **characterised in that** the resistance wire (23) forming the heating conductor (22) is applied to the support element (20; 32) and **in that** the cover layer (24) is then applied using film or screen-printing techniques.

13. Method according to claim 12, **characterised in that** the insulating layer (34) is applied to the support element (20; 32) using film or screen-printing techniques before the resistance wire (23) is applied, the resistance wire (23) being embedded into the insulating layer (34).

## Revendications

1. Dispositif de chauffage électrique (10 ; 30) pour systèmes à canaux chauds, notamment pour des buses à canaux chauds (12) et/ou des distributeurs à canaux chauds, avec au moins un élément porteur (20 ; 32) qui est conçu en forme de tube ou de manchon et qui porte au moins un conducteur chauffant (22), le conducteur chauffant (22) étant formé par un fil de résistance (23), le fil de résistance (23) qui forme le conducteur chauffant (22) étant recouvert par au moins une couche de couverture (24) qui assure une isolation électrique, une couche isolante (34) étant agencée entre l'élément porteur (20 ; 32) et le fil de résistance (23) et l'élément porteur (20 ; 32) pouvant être glissé ou posé sur un tube de matériau (13) d'une buse à canal chaud (12), **caractérisé en ce qu'**une couche de compensation est agencée entre l'élément porteur (20 ; 32) et la couche isolante (34), **en ce que** la couche isolante (34), la couche de couverture (24) et/ou la couche de compensation sont des feuilles cuites ou des pâtes de couches épaisses cuites qui sont appliquées sur l'élément porteur par une technique de sérigraphie ou de flexographie et **en ce que** la couche isolante (34) et/ou la couche de couverture (24) et/ou la couche de compensation sont soumises à une précontrainte de pression contre l'élément porteur (20 ; 32) après au moins un processus de cuisson.

2. Dispositif de chauffage selon la revendication 1, **caractérisé en ce qu'**il est prévu au moins un capteur de température (28), le capteur de température (28) étant conçu comme une couche électriquement conductrice dont la résistance électrique dépend de la température.

3. Dispositif de chauffage selon la revendication 2, **caractérisé en ce que** le capteur de température (28) et le fil de résistance (23) formant le conducteur chauffant (22) se trouvent dans un plan commun en direction radiale.

4. Dispositif de chauffage selon l'une des revendications 1 à 3, **caractérisé en ce que** l'élément porteur (20 ; 32) est fabriqué en un matériau fritté, le matériau fritté étant une céramique, un métal fritté ou un alliage métallique fritté.

5. Dispositif de chauffage selon l'une des revendications 1 à 4, **caractérisé en ce que** l'élément porteur (20 ; 32) est en métal, en alliage métallique, en acier ou en acier allié.

6. Dispositif de chauffage selon l'une des revendications 1 à 5, **caractérisé en ce que** la couche isolante (34) et/ou la couche de couverture (24) et/ou la couche de compensation est une couche diélectrique vitreuse et/ou céramique.

7. Dispositif de chauffage selon l'une des revendications 1 à 6, **caractérisé en ce que** le coefficient de dilatation thermique linéaire (TEC_{DE}) de la couche isolante (34) et/ou le coefficient de dilatation thermique linéaire (TEC_{DEA}) de la couche de couverture (24) et/ou le coefficient de dilatation thermique linéaire (TEC_{DEA}) de la couche de compensation après le processus de cuisson est inférieur au coefficient de dilatation thermique linéaire (TEC_{M}) de l'élément porteur (20 ; 32).

8. Dispositif de chauffage selon l'une des revendications précédentes, **caractérisé en ce que** le fil de résistance (23) forme un conducteur chauffant hélicoïdal, la conception et/ou l'agencement du fil de résistance (23) étant adaptés aux besoins respectifs en puissance de chauffage.

9. Dispositif de chauffage selon l'une des revendications précédentes, **caractérisé en ce qu'**une couche de contact (26) est agencée à chaque fois entre la couche isolante (34), le fil de résistance (23) formant le conducteur chauffant (22) et/ou le capteur de température (28).

10. Dispositif de chauffage selon l'une des revendications précédentes, **caractérisé en ce que** la couche isolante (34) et/ou la couche de couverture (24) et/ou la couche de compensation et/ou la couche de contact (26) et/ou la couche servant de capteur de température (28) forment un assemblage de couches enrobant le fil de résistance (23), le fil de résistance (23) qui forme le conducteur chauffant (22) étant noyé dans la couche isolante (34) et/ou dans la couche de contact (26).

11. Buse à canal chaud comportant un dispositif de chauffage électrique (10 ; 30) selon l'une des revendications 1 à 10, **caractérisée en ce que** le dispositif de chauffage électrique (10 ; 30) est posé sur un tube de matériau cylindrique (13) en formant un ajustement ayant un jeu prédéterminé.

12. Procédé de fabrication d'un dispositif de chauffage électrique (10 ; 30) pour des systèmes à canaux chauds, notamment pour des buses à canaux chauds (12) et/ou pour des distributeurs à canaux chauds, selon l'une des revendications 1 à 10, **caractérisé en ce que** l'on applique le fil de résistance (23) formant le conducteur chauffant (22) sur l'élément porteur (20 ; 32) et **en ce que** l'on applique ensuite la couche de couverture (24) au moyen d'une technique de sérigraphie ou de flexographie.

13. Procédé selon la revendication 12, **caractérisé en ce que**, avant d'appliquer le fil de résistance (23), on applique la couche isolante (34) sur l'élément porteur (20 ; 32) au moyen d'une technique de sérigraphie ou de flexographie, le fil de résistance (23) étant noyé dans la couche isolante (34).
